# EUROPEAN PATENT APPLICATION

(11) **EP 1 932 711 A2**
(43) Date of publication of application: **18.06.2008**
(21) Application number: 07024301.9
(22) Date of filing: 14.12.2007
(51) Int. Cl.: B60K 37/06, B60K 35/00, G06F 3/048

(54) **Remotely operated input system**

(30) Priority: 14.12.2006 JP 2006337274
(71) Applicant: Kabushiki Kaisha Tokai-Rika-Denki-Seisakusho, Niwa-gun, Aichi 480-0195 (JP)
(72) Inventor: Masahiko, Miyata, Niwa-gun Aichi 480-0195 (JP); Terukazu, Hiroe, Niwa-gun Aichi 480-0195 (JP)
(74) Representative: Grünecker, Kinkeldey, Stockmair & Schwanhäusser Anwaltssozietät

(57) **Abstract**

A display type input system is installed in a vehicle as an input machine. The display type input system displays various button selection determination screens of a menu screen, a destination setting screen, an audio setting screen, etc., on a display in the vehicle and allows the user to move a button focus on the display with a remote input device distant from the display to select and determine any desired item button, thereby causing the vehicle to execute the vehicle-installed function responsive to the button. A determination button operated by the user to determine the selected item button is laid out for the screens.

## Description

### BACKGROUND OF THE INVENTION

This invention relates to a remotely operated input system for moving a selection coordinate position of a screen of a display with an input device placed at a position distant from the display, thereby making selection determination of any of various buttons displayed on the screen of the display.

Hitherto, in a vehicle, a remotely operated input system for enabling the user to use an input device at hand to perform selection determination operation of any of various function buttons on a screen existing in a center cluster, etc., has been widely developed. An example of this kind of remotely operated input system is disclosed in JP-A-2006-29917, etc., for example. In such a remotely operated input system, the operator moves a cursor or a button focus on a screen with an input device at hand and performs screen coordinate position selection operation, thereby selecting any of various item buttons laid out for the screen, and operates a determination switch provided on the input device with the button selected, thereby determining selection of the item button on the screen to determine the function assigned to the item button.

In this case, however, since the input device is provided with the determination switch and a return switch as dedicated switch components, the buttons become necessary additionally as the components of the input device and the structure of the input device becomes complicated; this is a problem. Particularly, if the input device is provided with a touch sense feedback function of communicating the screen operation position to the operator by producing an operation feeling of the input device as to which item button the operator performs selection operation of at present, complicating the structure of the input device becomes further noticeable, also causing a problem to occur.

### SUMMARY OF THE INVENTION

It is an object of the invention to provide a remotely operated input system for making it possible to simplify the structure of an input device, the remotely operated input system for allowing the user to specify the coordinate position of an item button displayed on a display with the input device at a distant position from the item button (display), thereby determining selection of the item button.

In order to achieve the above object, the present invention provides the following arrangements.
(1) A remotely operated input system comprising:
   a display;
   a display controller that controls the display to display a function selection screen in which various item buttons and a determination region are laid out;
   an input device that is separated from the display and allows an operator to perform determination operation of the various item buttons by designating an absolute position and moving a selection coordinate position on the screen based on the designated absolute position; and
   a function execution unit that recognizes the item button
   in which the selection coordinate position is placed just before the selection coordinate position is placed in the determination region and executes a function of the recognized item button.
(2) The remotely operated input system according to (1), wherein the display controller controls the display to display the determination region as a determination button different from the item buttons.
(3) The remotely operated input system according to (1), wherein the various item buttons and the determination region in the function selection screen are arranged so that the selection coordinate position operated by the operator can be moved to one common determination region directly from any of the item buttons.
(4) The remotely operated input system according to (1), wherein
   the display controller lays out, in a display coordinate region of the item buttons, a selection coordinate region in which the selection coordinate position is to be placed when the item button is selected and a determination coordinate region in which the selection coordinate position is to be placed when the selected item button is determined, and
   when the selection coordinate position is placed in the determination coordinate region, the function execution unit executes a function of the selection coordinate region in which the selection coordinate position is placed just before the selection coordinate position is placed in the determination coordinate region.
(5) The remotely operated input system according to (4), wherein
   the determination coordinate region includes a plurality of selection determination coordinate regions which are shifted in a predetermined direction,
   when the selection coordinate position is placed on one of the plurality of selection determination coordinate regions, a content of the item button is shifted by one in a shifting direction corresponding to the predetermined direction.
(6) The remotely operated input system according to (4), wherein the display controller lays out, in the function selection screen, a neutral coordinate region which connects the contiguous item buttons for allowing the operator to move the selection coordinate position from one of the item buttons to another.
(7) The remotely operated input system according to (1), wherein the display controller lays out, in the function selection screen, a return region for returning a displayed screen to a preceding screen when the selection coordinate position is placed on the return region.
(8) The remotely operated input system according to (1) further comprising a click feel generation mechanism for generating a click feel for operation of the input device when the item button or the determination region placed in a selection state with the selection coordinate position is switched to another button or another coordinate region.
(9) The remotely operated input system according to (1), wherein when the selection coordinate position is placed in the determination region, the function execution unit immediately executes the function of the recognized item button.
(10) The remotely operated input system according to (1), the remotely operated input system is used as an input channel of a vehicle-installed machine.

According to the arrangement, to select and determine one of the item buttons displayed on the screen of the display, first the operator places the selection coordinate position on the function selection determination screen displayed on the screen of the display in any desired item button on the screen by operating the input device at a distant position from the display to select the item button. Then, the operator moves the selection coordinate position on the function selection determination screen with the button selected to the determination region on the screen with the input device for executing the function of the selected item button. Therefore, in the arrangement, the determination button is laid out for the screen of the display, so that the input device need not be provided with a mechanical determination switch and thus it is made possible to simplify the structure of the input device.

According to the arrangement, the determination button is displayed as a dedicated button on the screen of the display, so that the operator can visually recognize the determination button and can easily select the determination button.

According to the arrangement, in the screen layout of the screen, for example, one determination button is surrounded by a plurality of item buttons and it is made possible to share one determination button between or among a plurality of item buttons. Thus, it is made possible to effectively use the button layout space on the screen as compared with the case where the determination areas are provided in a one-to-one correspondence with the item buttons, for example.

According to the arrangement, each item button is assigned a determination coordinate region and is also provided with a determination function, so that the need for laying out a determination button separate from the item button for the screen is eliminated and the flexibility of the screen button layout can be improved, etc.

According to the arrangement, a plurality of selection determination coordinate regions assigned to each item button are provided as selection determination coordinate regions having both selection and determination functions, so that the operator places the selection coordinate position on the screen in the selection determination coordinate region, whereby it is made possible for the operator to move up or move down the item of the item button placed in the selection state at the time.

According to the arrangement, a plurality of item buttons are laid out for the screen of the display and are connected by the neutral coordinate region, whereby the selection coordinate position can be moved from one of the item buttons to another, so that it is made possible to move the selection coordinate position on the screen between the item buttons and perform selection determination operation of selecting a predetermined item button.

According to the arrangement, the return region of a return button, etc., is laid out for the screen of the display, so that the input device need not be provided with a mechanical return button and thus it is highly advantageous for further simplifying the structure of the input device.

According to the arrangement, for example, when the operator moves the selection coordinate position on the screen from an item button to a determination region, if the click feel generation mechanism gives load in the opposite direction to the determination operation direction at the time to the input device to produce a click feel on the input device, it is made possible to make a situation in which the operator performs determination operation by mistake in selecting the item button hard to occur.

According to the arrangement, when the operator places the selection coordinate position in the determination region, the function operation is executed in an instant, so that it is made possible to shorten the time required from selection coordinate position operation to function execution, and a feeling that something is wrong, etc.; at the determination operation time is hard to occur.

According to the arrangement, if the determination region is provided on the same screen as the item buttons, determination region selection operation is also performed in an operation sequence of item button selection changing the selection coordinate position on the screen. Therefore, for example, if the input device is provided with a mechanical determination button, the operator needs to select the selection coordinate position while seeing the display screen and then operate the mechanical button after completion of the selection operation of the selection coordinate position, namely, two-step operation becomes necessary. However, if the determination region is laid out for the screen of the display as in the arrangement, it is made possible to perform the determination operation not through such two-step operation and it is made possible to shorten the operation time required for the selection determination operation of the item button. Thus, if the time required for item button selection determination operation on the screen is shortened, the operator is enabled to concentrate on driving the vehicle, and the advantage is also high from the point of ensuring safety of driving the vehicle.

According to the invention, in the remotely operated input system for allowing the user to specify the coordinate position of an item button displayed on the display with the input device at a distant position from the item button (display), thereby determining selection of the item button, the structure of the input device can be simplified.

### BRIEF DESCRIPTION OF THE DRAWINGS

FIG. 1 is a perspective view to show a specific example of the inside of a vehicle in one embodiment of the invention;
FIG. 2 is a diagram to show the schematic configuration of a display type input system;
FIG. 3 is a drawing to show various screens displayed on a display in the inside of the vehicle;
FIG. 4 is a drawing to show a menu screen as another button layout;
FIG. 5 is a drawing to show a menu screen as another button layout;
FIG. 6 is a drawing to show a menu screen as another button layout;
FIG. 7 is a drawing to show an audio setting screen as another button layout;
FIG. 8 is a drawing to show an audio setting screen as another button layout;
FIGS. 9A to 9E are conceptual drawings to show specific examples of other button layouts of audio setting screens; and
FIG. 10 is a drawing to show the schematic configuration of a remote input device of slide type.

### DETAILED DESCRIPTION OF PREFERRED EMBODIMENTS

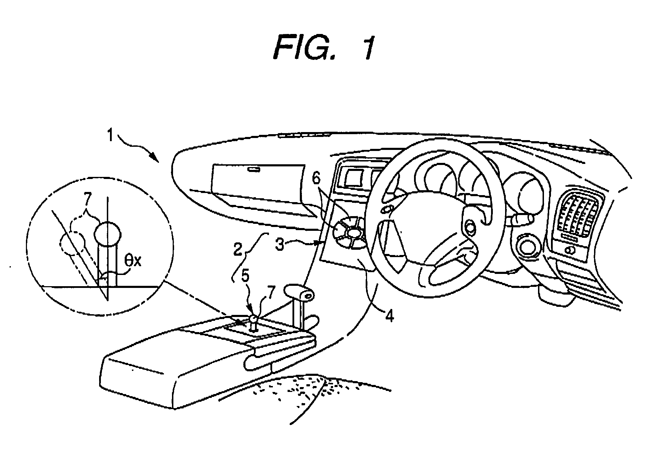

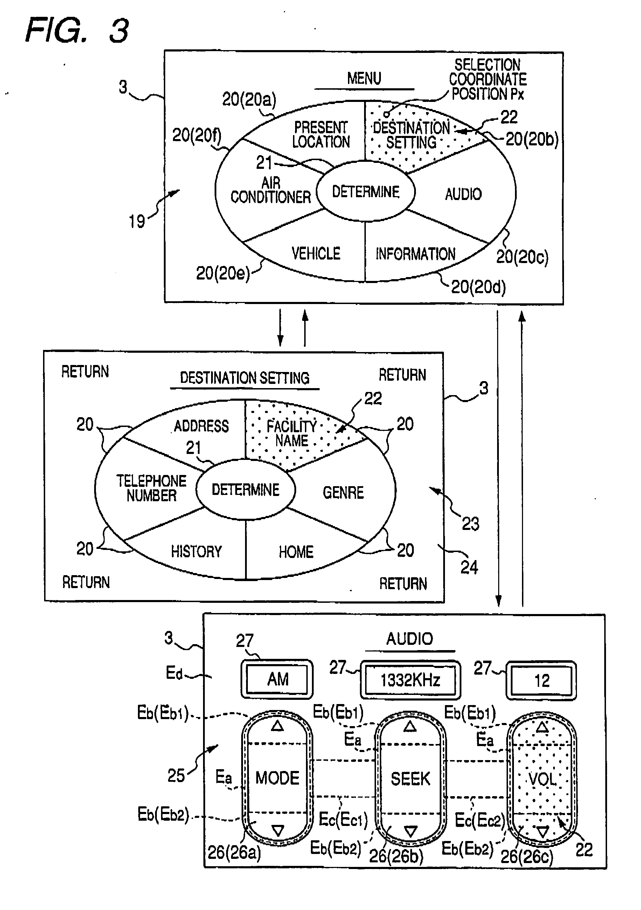

An embodiment of a remotely operated input system embodying the invention will be discussed according to FIGS. 1 to 9.
As shown in FIG. 1, a display type input system 2 as an input machine for executing various types of vehicle operation is installed in a vehicle 1. This display type input system 2 is a system for displaying a button selection determination screen 4 (19, 23, 25; see FIG. 3) on a display 3 in the vehicle and allowing the user to move a button focus or a cursor on the display 3 with a remote input device 5 distant from the display 3 and select and determine any desired item button 6 (20, 26; see FIG. 3) in the button selection determination screen 4, thereby causing the vehicle 1 to execute any of various vehicle-installed machines responsive to the item button 6. The display 3 corresponds to a display and the remote input device 5 corresponds to an input device.

The display 3 is made of a color liquid crystal screen, etc., for example, and is placed at a center cluster position in the vehicle. The display 3 displays various item buttons 6 as operation buttons in operating various vehicle-installed machines. The item buttons 6 include car navigation buttons operated by the user to display the present position, set a destination, etc., in a car navigation system, audio buttons operated by the user to select a number, set the sound volume, etc., in an audio system, air conditioner buttons operated by the user to set a temperature, set the wind direction, etc., in an air conditioner, and the like, for example.

The remote input device 5 is placed at a center console position in the vehicle and is connected to the display 3 through electrical wiring (not shown). The remote input device 5 is an input machine used for the user to change a selection coordinate position Px of a button focus, a cursor, etc., displayed on the display 3 (see FIG. 3). In the example, it adopts a joy stick system of moving the button focus or the cursor on the display 3 by inclining an upright operation lever 7 with the lever base end as a supporting point.

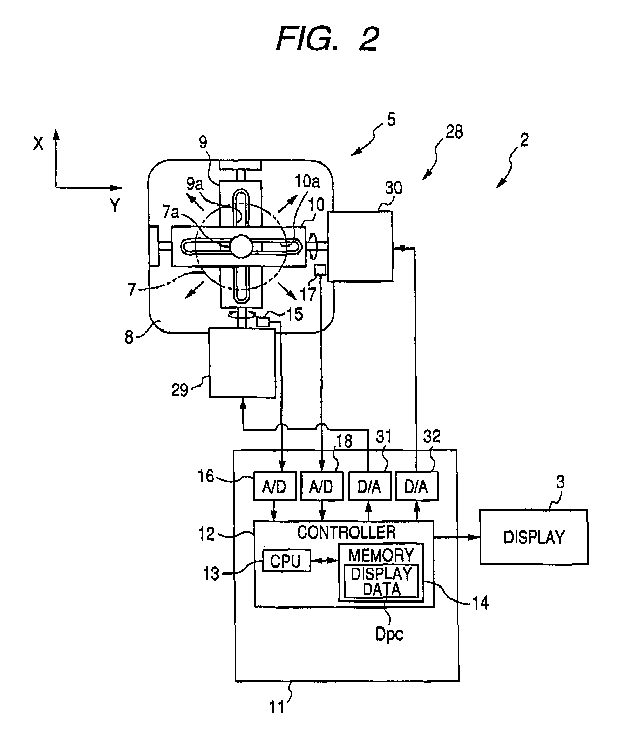

As shown in FIG. 2, the remote input device 5 is provided with a base 8 for supporting the operation lever 7 of a part grasped by the operator at the operating time on the lever base end. An X axis guide plate 9 extending in a back and forth direction of the vehicle (X axis direction in FIG. 2) is joined to the base 8 for rotation along round the X axis. A long hole 9a extending in the X axis direction is made in the X axis guide plate 9 throughout the plate. A Y axis guide plate 10 extending in a side-to-side direction of the vehicle (Y axis direction in FIG. 2) is joined to the base 8 for rotation along round the Y axis and in a placement state crossing the X axis guide plate 9. A long hole 10a extending in the Y axis direction and crossing the long hole 9a of the X axis guide plate 9 is made in the Y axis guide plate 10.

The operation lever 7 adopts an attachment state in which a lever shaft 7a extending from the base end is inserted into both holes of the long hole 9a of the X axis guide plate 9 and the long hole 10a of the Y axis guide plate 10. Thus, when the operator inclines the operation lever 7, the X axis guide plate 9 and the Y axis guide plate 10 rotate, whereby lever inclination operation with 360 degrees as operation directions in the plane direction crossing the operation lever 7 is allowed.

The remote input device 5 is provided with a computation unit 11 for controlling the display type input system 2. The computation unit 11 computes the operation position (operation amount) when the operation lever 7 is inclined, and finds the coordinate position of the display 3 specified by the operator of the operation lever 7 as the X-Y coordinate system. At this time, the computation unit 11 detects the selection coordinate position of the display 3 by detecting the absolute position uniquely determining the operation position of the operation lever 7 and the screen coordinate position of the display 3.

The computation unit 11 is provided with a controller 12 as a control unit of the computation unit 11. The controller 12 is made up of devices of a CPU 13, memory 14, etc., and operates in accordance with a control program stored in the memory 14, thereby performing selection coordinate position computation for finding which coordinate position of the display 3 is selected with the remote input device 5 and performing screen display control for displaying various screens on the display 3. An X axis encoder 15 for detecting an inclination angle θx (see FIG. 1) around the X axis of the operation lever 7 is connected to the controller 12 through a first A/D conversion circuit 16 in the computation unit 11. A Y axis encoder 17 for detecting an inclination angle θx around the Y axis of the operation lever 7 is connected to the controller 12 through a second A/D conversion circuit 18 in the computation unit 11. The controller 12 forms display control means and function execution means.

The controller 12 computes the inclination angle of the X axis guide plate 9, namely, the inclination angle of the operation lever 7 to the X axis side from the detection value of the X axis encoder 15 and also computes the inclination angle of the Y axis guide plate 10, namely, the inclination angle of the operation lever 7 to the Y axis side from the detection value of the Y axis encoder 17 and sees the combination of the inclination angles, thereby computing the operation position of the operation lever 7 (inclination angle θx). The controller 12 keeps track of the correspondence between the operation position of the operation lever 7 and the selection coordinate position on the display 3 as the absolute position and thus keeps track of which coordinate position on the display 3 is selected by the operator by seeing the operation position of the operation lever 7 thus computed.

Display data Dpc of various screens to be displayed on the display 3 is stored in the memory 14 of the controller 12. The controller 12 performs display control of various screens concerning vehicle driving on the display 3 by displaying the display data Dpc on the display 3. The controller 12 displays a menu screen 19 as shown in FIG. 3, for example, on the display 3 as an initial operation screen. The menu screen 19 displays selection item buttons 20 operated by the user when selecting any item in setting various functions of the vehicle 1 and a determination button 21 operated by the user to determine the selected selection item button 20. That is, the menu screen 19 in the example is an item setting screen of determination system display type for displaying the determination button 21 on the display 3.

The selection item buttons 20 are laid out each for a predetermined coordinate range and are displayed on the display 3. If the selection coordinate position Px on the display 3 with the remote input device 5 overlaps the layout region (selected coordinate region) of the selection item button 20 in pixel units, the button selection is recognized and is highlighted as a button focus 22 (dot region shown in FIG. 3) . The selection item buttons 20 are selectively displayed as one button focus 22 one button at a time. When one selected selection item button 20 is changed to another selection item button 20, the button focus 22 moves to the newly selected selection item button 20, which then is highlighted as the button focus 22. The selection coordinate position Px is displayed on the screen, but may be displayed on the screen, for example, as a cursor.

The selection item buttons 20 displayed on the menu screen 19 include a present location button 20a selected by the user to display the present location on the display 3, a destination setting button 20b selected by the user to set a destination in the car navigation system, an audio button 20c operated by the user to set various functions of the audio system, an information button 20d selected by the user to display information data acquired with G-Book, etc., for example, on the display 3, a vehicle button 20e selected by the user to display the operation state of the vehicle 1 on the display 3, and an air conditioner button 20f operated by the user to set the various functions of the vehicle air conditioner. The selection item buttons 20 are laid out at equal intervals along the circumferential direction of the screen of the display 3.

The determination button 21 of the menu screen 19 is laid out for a predetermined coordinate range and is displayed on the display 3 like the selection item button 20 and is placed at the center position surrounded by the selection item buttons 20 thereby enabling the user to immediately select the determination button 21 regardless of the position of the selection item button 20. If the selection coordinate position Px on the display 3 with the remote input device 5 overlaps the layout region of the determination button 21 in pixel units, the button selection is recognized and the selection item button 20 having been selected just before the determination button 21 is selected is placed in a determination state in an instant. To determine selection of the selection item button 20 on the menu screen 19, the selection coordinate position Px on the display 3 is moved with the remote input device 5 for positioning the button focus 22 at any desired selection item button 20 and with the button selected, the selection coordinate position with the remote input device 5 is set to the determination button 21.

Each of the selection item buttons 20 is a button having only the button selection function. To determine any of the selection item buttons 20, it is necessary to position the selection coordinate position Px on the display 3 in the layout region of the determination button 21 (determination coordinate region) and switch display of the button focus 22 to the determination button 21. That is, to determine any of the selection item buttons 20, it becomes necessary to move the selection coordinate position Px from the coordinate region of the selected selection item button 20 highlighted as the button focus 22 to the coordinate region of the determination button 21, namely, move the selection coordinate position Px to the outside of the button focus 22.

When the user determines selection of any selection item button 20 on the menu screen 19, the display 3 makes a transition to a display screen at a lower level responsive to the selected selection item button 20. For example, if the user determines selection of the destination setting button 20b on the menu screen 19, the display 3 displays a destination setting screen 23 for selecting a destination setting method. The destination setting screen 23 is an item setting screen of determination system display type having a button layout design similar to the menu screen 19; selection item buttons 20 for detailed setting of the destination are laid out at equal intervals along the circumferential direction of the screen and determination button 21 is positioned at the center of the selection item buttons 20. The destination setting screen 23 has a return button 24 operated by the user to return display to the menu screen 19 of the preceding screen one level before throughout the periphery of the selection item buttons 20.

If the user determines selection of the audio button 20c on the menu screen 19, the display 3 displays an audio setting screen 25 as a detailed setting screen of various functions of the audio system. The audio setting screen 25 displays determination function item buttons 26 operated by the user to set various functions of the audio system. If a button displayed with one button focus 22 is one button unit, both of a selection function and a determination function are assigned to each of the determination function item buttons 26. That is, the audio setting screen 25 in the example is an item setting screen of determination system omission type wherein not only the selection function, but also the determination function is assigned to one item button and a determination button is omitted. The various screens 4, 19, 23, and 25 form function selection screens.

The determination function item buttons 26 displayed on the audio setting screen 25 include a mode button 26a operated by the user to set a radio reception mode from among various modes of AM, FM, etc., a seek button 26b operated by the user to set the radio reception frequency, and a volume button 26c operated by the user to set the sound volume, for example, for the radio function. The determination function item buttons 26 are laid out side by side at equal intervals along the width direction of the display 3.

In the audio setting screen 25 in the example, a selected coordinate region Ea and a determination coordinate region Eb are laid out for the display coordinate region of each of the determination function item buttons 26. If the selection coordinate position Px is selected in the selected coordinate region Ea of the determination function item button 26, the determination function item button 26 is selected and is highlighted as the button focus 22. If the user brings the selection coordinate position Px into the determination coordinate region Eb of the same item with the button selected, the selected determination function item button 26 is placed in a determination state without display switching of the button focus 22.

Each of the determination function item buttons 26 is a button capable of determining selection of a predetermined one from among item descriptions (item values) as button items to be set with the button. That is, if the selection coordinate position Px is positioned in the determination coordinate region Eb of the determination function item button 26, the determination coordinate region Eb is formed as the determination coordinate region having a selection function of determining a new setup item while changing the item description. Thus, when the selection coordinate position Px is positioned in the determination coordinate region Eb of the determination function item button 26, the item description (item value) of the button item whose selection is determined with the determination function item button 26 is changed to the next item description and is set. Display regions 27 for displaying the currently selected item description from among the item descriptions (item values) are laid out above the determination function item buttons 26 in the screen.

The determination coordinate region Eb in the example is made up of a first selection determination coordinate region Eb1 specified by the user to move up the item description whose selection is determined with the determination function item button 26 to one side and a second selection determination coordinate region Eb2 specified by the user to move down the item description whose selection is determined with the determination function item button 26 to an opposite side. For example, if the determination function item button 26 is the volume button 26c, whenever the user operates the first selection determination coordinate region Eb1, the sound volume is raised one step at a time and whenever the user operates the second selection determination coordinate region Eb2, the sound volume is dropped one step at a time. The determination button 21 and the determination coordinate region Eb (Eb1 and Eb2) make up a determination region.

Neutral coordinate regions Ec for connecting contiguous item buttons are laid out for the audio setting screen 25. In the example, a first neutral coordinate region Ec1 for connecting the mode button 26a and the seek button 26b and a second neutral coordinate region Ec2 for connecting the seek button 26b and the volume button 26c are included. If the selection coordinate position Px is positioned in the neutral coordinate region Ec1 or Ec2, a neutral state in which none of the determination function item buttons 26 is selected is entered. A screen coordinate region other than the coordinate regions Ea, Eb of the determination function item buttons 26 or the neutral coordinate regions Ec is laid out for the audio setting screen 25 as a return coordinate region Ed. If the user operates the selection coordinate position Px in the return coordinate region Ed, the display 3 is returned to the menu screen 19 of a display screen at a higher level. The return button 24 and the return coordinate region Ed make up a return region.

As shown in FIG. 2, the remote input device 5 is provided with a touch sense feedback mechanism 28 capable of giving a click feel to the operation lever 7. The touch sense feedback mechanism 28 will be discussed below: The remote input device 5 is provided with an X axis motor 29 capable of giving load in the X axis direction to the operation lever 7 and a Y axis motor 30 capable of giving load in the Y axis direction to the operation lever 7. The X axis motor 29 is joined to the X axis guide plate 9 in a state in which the motor shaft of the X axis motor 29 becomes the same axis as the rotation shaft of the X axis guide plate 9, and is connected to the controller 12 through a D/A converter 31 in the computation unit 11. The Y axis motor 30 is joined to the Y axis guide plate 10 in a state in which the motor shaft of the Y axis motor 30 becomes the same axis as the rotation shaft of the Y axis guide plate 10, and is connected to the controller 12 through a D/A converter 32 in the computation unit 11. The touch sense feedback mechanism 28 corresponds to a click feel generation mechanism.

Each of the motors 29 and 30 is a control motor for sending a pulse signal for rotating a rotor; for example, a stepping motor, etc., is used. The operation lever 7 is connected to the motors 29 and 30 through the guide plates 9 and 10. Since this kind of the control motor is torque free at the non-energization time, if the motors 29 and 30 are control motors, although the operation lever 7 is joined to the motors 29 and 30 through the guide plates 9 and 10, inclining operation of the operation lever 7 is allowed. The controller 12 controls drive of the motors 29 and 30 to give a touch sense to the operation lever 7 based on the detection values acquired from the X axis encoder 15 and the Y axis encoder 17.

When the user operates the selection coordinate position Px on the display 3 with the remote input device 5, to make hard to occur a situation in which the user performs determination operation or return operation by mistake when the selection coordinate position Px on the display 3 enters the determination button 21 (determination coordinate region Eb) or the return button 24 (return coordinate region Ed) from any item button 20 (selected coordinate region Ea), the controller 12 drives the motors 29 and 30 to give a click feel (touch sense) in the opposite direction to the operation direction to the operation lever 7 subjected to determination operation. At this time, the controller 12 rotates the X axis motor 29 in the opposite direction to the rotation direction of the X axis guide plate 9 and rotates the Y axis motor 30 in the opposite direction to the rotation direction of the Y axis guide plate 10, thereby giving a click feel to the operation lever 7.

To compute the operation amount of the operation lever 7 from the detection values acquired from the X axis encoder 15 and the Y axis encoder 17, the controller 12 computes the change amount per time, of the lever operation amount, thereby computing the operation speed of the operation lever 7. To give a touch sense to the operation lever 7 by driving the motors 29 and 30, the controller 12 drives the motors 29 and 30 so as to generate the drive force responsive to the operation speed of the operation lever 7 at this time. For example, when the operation speed of the operation lever 7 is high, the drive speed of the motors 29 and 30 is increased for generating a large click feel on the operation lever 7; when the operation speed of the operation lever 7 is low, the drive speed of the motors 29 and 30 is decreased for generating a small click feel on the operation lever 7.

Next, the operation of the display type input system 2 in the example is as follows:
For example, when the user turns a vehicle key inserted into a key cylinder of a drive seat and sets an ignition switch (not shown) to an ACC position or an ON position, the display type input system 2 is started. At this time, the controller 12 displays the menu screen 19 as shown in FIG. 3 as an initial operation screen on the display 3. To operate various vehicle-installed machines of the vehicle 1, the operator inclines the operation lever 7 of the remote input device 5 at a distant position from the display 3, thereby operating the selection coordinate position Px on the display 3 and determining selection of any of the various buttons on the display 3.

At this time, the controller 12 computes the operation position of the operation lever 7 based on the detection values acquired from the X axis encoder 15 and the Y axis encoder 17 and recognizes the operation position as the selection coordinate position Px on the display 3 at the absolute position. The operator inclines the operation lever 7 of the remote input device 5, thereby selecting any desired button from among the selection item buttons 20 displayed on the menu screen 19. If the selection coordinate position Px overlaps the display coordinate region of any of the selection item buttons 20, then the controller 12 recognizes that the operator selects the selection item button 20, and highlights the selection item button 20 as the button focus 22.

Subsequently, the operator selecting the button inclines the operation lever 7 to the center, thereby placing the selection coordinate position Px on the display 3 on the determination button 21. When the selection coordinate position Px overlaps the display coordinate region of the determination button 21, then the controller 12 recognizes that the operator selects the determination button 21, and highlights the determination button 21 as the button focus 22 as a notification that the determination operation has been performed. When the controller 12 recognizes selection of the determination button 21, it recognizes the selection item button 20 selected just before the selection coordinate position Px enters the determination button 21 as the operation request button, and causes the vehicle 1 to execute the processing responsive to the function of the selection determination button.

At this time, when the operator places the selection coordinate position Px on the determination button 21 with the operation lever 7 and performs button determination operation, the controller 12 gives the operation lever 7 load in the opposite direction to the operation direction of the operation lever 7 when the operator performs determination operation when the selection coordinate position Px enters the determination button 21 to give a click feel to the operation lever 7. The controller 12 sees the change direction in the pixel units of the selection coordinate position Px, thereby detecting the operation direction and the operation speed of the operation lever 7 in succession and when the selection coordinate position Px enters the determination button 21, the controller 12 drives the motors 29 and 30 in the appropriate drive direction and drive amount to give the click feel in the opposite direction to the operation direction and responsive to the operation speed of the operation lever 7 to the operation lever 7.

If the user determines selection of the destination setting button 20b, for example, on the menu screen 19, the controller 12 makes a transition to the operation of starting destination setting of the car navigation system of the button function of the destination setting button 20b and displays the destination setting screen 23 shown in FIG. 3 on the display 3. The controller 12 displays the destination setting screen 23 on the display 3 in the same button layout and design as the menu screen 19 executes the button selection determination operation on the destination setting screen 23 in the same manner as for the menu screen 19. When the user selects the return button 24 with the operation lever 7, the controller 12 also controls drive of the motors 29 and 30 in a similar manner to that for the determination button 21 to give a click feel to the operation lever 7.

If the user determines selection of the audio button 20c on the menu screen 19, the controller 12 makes a transition to the operation of starting detailed setting of the audio system of the button function of the audio button 20c and displays the audio setting screen 25 shown in FIG. 3 on the display 3. If an item button highlighted with one button focus 22 is one button unit, unlike the menu screen 19 or the destination setting screen 23, the audio setting screen 25 is displayed as an item setting screen of determination system omission type displaying the determination function item buttons 26 each assigned both of a selection function and a determination function.

At this time, it is assumed that the operator operates the operation lever 7 of the remote input device 5 and positions the selection coordinate position Px on the audio setting screen 25 in the selected coordinate region Ea of the volume button 26c, for example. If the controller 12 recognizes that the selection coordinate position Px overlaps the selected coordinate region Ea of the volume button 26c, then the controller 12 recognizes that the operator selects the volume button 26c, and highlights the volume button 26c with the button focus 22. At this time, the value of the sound volume determined at the time is displayed in the display region 27 above the volume button 26c in the screen.

Subsequently, to raise the sound volume of the audio system, the operator operates the operation lever 7 of the remote input device 5 and moves the selection coordinate position Px on the audio setting screen 25 to the first selection determination coordinate region Eb1 as the operator positions the selection coordinate position Px at "Δ" displayed on the audio setting screen 25. If the controller 12 recognizes that the selection coordinate position Px overlaps the first selection determination coordinate region Eb1 of the volume button 26c, then the controller 12 recognizes that the operator operates the volume button 26c to raise the sound volume, and raises the sound volume of the audio system one step; whenever the operator positions the selection coordinate position Px in the first selection determination coordinate region Eb1, the controller 12 raises the sound volume one step at a time.

At this time, even if the operator moves the selection coordinate position Px from the selected coordinate region Ea of the volume button 26c to the first selection determination coordinate region Eb1 of the volume button 26c, the item value in the display region 27 changes only and display switching of moving the button focus 22 to any other determination button, etc., is not performed and highlighting the volume button 26c with the button focus 22 is maintained. When determination operation is performed with the volume button 26c, the operator may be informed that the button determination operation has been performed by blinking the volume button 26c, for example, at the determination operation time although move switching of the button focus 22 is not performed.

On the other hand, to drop the sound volume of the audio system, the operator operates the operation lever 7 of the remote input device 5 and moves the selection coordinate position Px on the audio setting screen 25 to the second selection determination coordinate region Eb2 as the operator positions the selection coordinate position Px at "∇" displayed on the audio setting screen 25. If the controller 12 recognizes that the selection coordinate position Px overlaps the second selection determination coordinate region Eb2 of the volume button 26c, then the controller 12 recognizes that the operator operates the volume button 26c to drop the sound volume, and drops the sound volume of the audio system one step; whenever the operator positions the selection coordinate position Px in the second selection determination coordinate region Eb2, the controller 12 drops the sound volume one step at a time.

At this time, when the operator positions the selection coordinate position Px in the determination coordinate region Eb with the operation lever 7 and performs button determination operation, the controller 12 gives the operation lever 7 load in the opposite direction to the operation direction of the operation lever 7 when the operator performs determination operation when the selection coordinate position Px enters the determination coordinate region Eb to give a click feel to the operation lever 7 as with the item setting screen of determination system display type such as the menu screen 19 or the destination setting screen 23. When the operator positions the selection coordinate position Px in the return coordinate region Ed with the operation lever 7 and performs screen return operation, the controller 12 also gives a click feel to the operation lever 7 in a similar manner to that at the button determination operation time.

To switch the selection coordinate position Px from the volume button 26c to the seek button 26b, since the volume button 26c and the seek button 26b are joined in the second neutral coordinate region Ec2, the selection coordinate position is moved from the volume button 26c through the second neutral coordinate region Ec2 to the seek button 26b. At this time, as the display form of the button focus 22, the button focus 22 may highlight the volume button 26c until the selection coordinate position Px enters the seek button 26b or the button focus 22 may disappear when the selection coordinate position Px exists in the second neutral coordinate region Ec2.

Therefore, in the example, the determination button 21 is laid out for the screen of the display 3 and thus the remote input device 5 need not be provided with a mechanical determination button 21, so that the structure of the remote input device 5 can be simplified. If the remote input device 5 is provided with the touch sense feedback mechanism 28 made up of the motors 29 and 30 as in the example, the placement space of the mechanism becomes necessary. Thus, if it is assumed that the remote input device 5 requires a mechanical determination button 21, the placement space of the determination button introduces a problem and a fear of upsizing the remote input device 5 also occurs. In the example, however, these problems need not be considered.

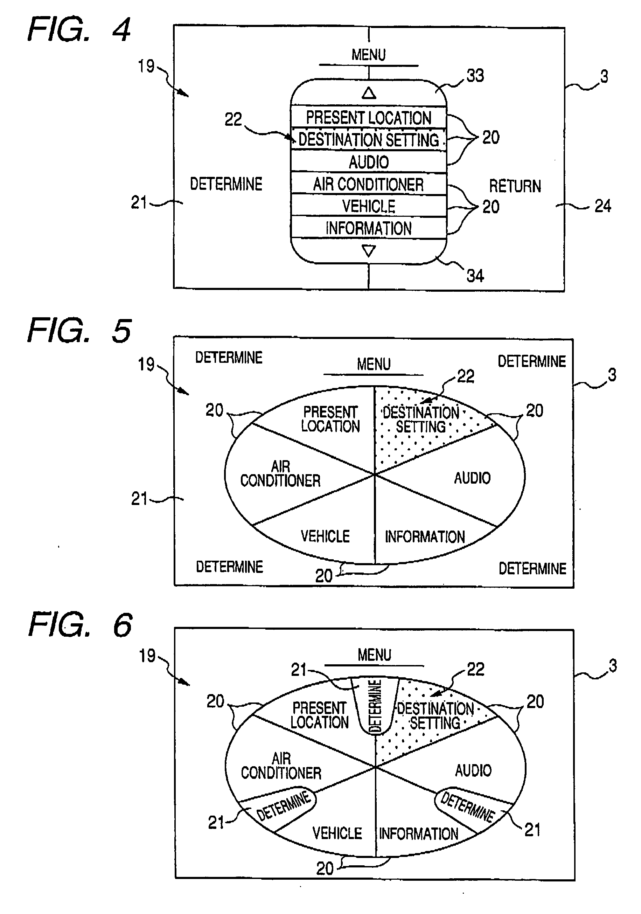

The button selection determination screen 4 displayed on the display 3 may be a screen adopting a button layout different from that of the screen shown in FIG. 3. Specific examples are as follows:
The item setting screen of determination system display type (menu screen 19, destination setting screen 23) of the display 3 may be a screen where the selection item buttons 20 are arranged in one direction (up and down direction of the screen in FIG. 4), as shown in FIG. 4.

The item setting screen of determination system display type (menu screen 19, destination setting screen 23) of the display 3 may be provided with scroll buttons 33 and 34 as shown in FIG. 4 and if the user operates the scroll button 33, 34, other selection item buttons 20 hidden so far may be displayed. In this case, if the selection item buttons 20 span a broad spectrum, the selection item buttons 20 can be displayed efficiently on the display 3.

- The item setting screen of determination system display type (menu screen 19, destination setting screen 23) of the display 3 may be a screen where a determination button 21 (determination coordinate region) may be laid out for a coordinate region on the periphery of the selection item buttons 20 as shown in FIG. 5.

- The item setting screen of determination system display type (menu screen 19, destination setting screen 23) of the display 3 may be a button layout of sharing one determination button 21 between two selection item buttons 20 and 20, as shown in FIG. 6.

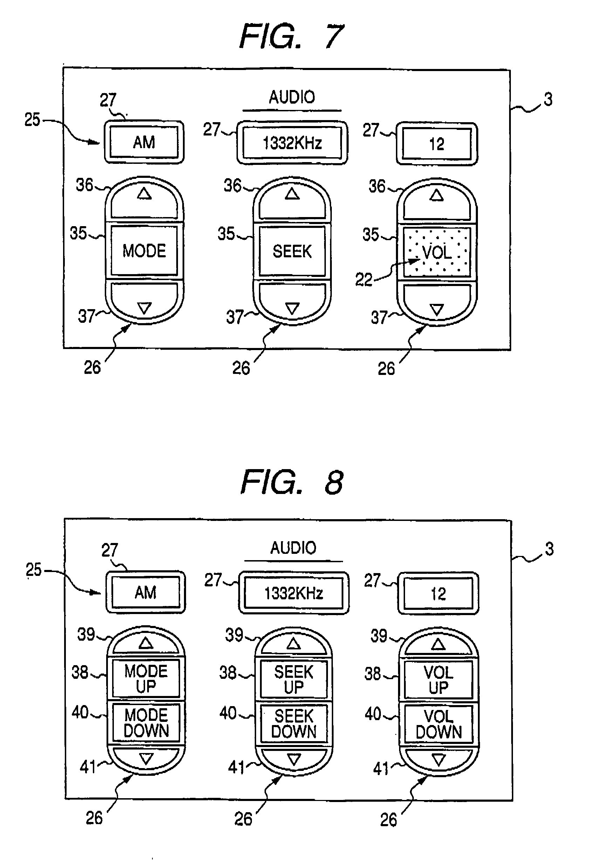

- The determination function item buttons 26 of the item setting screen of determination system omission type (audio setting screen 25) may be each a button with a selected coordinate region Ea and determination coordinate regions Eb (Eb1 and Eb2) laid out as independent operation buttons like the buttons of the menu screen 19, as shown in FIG. 7. In this case, one determination function item button 26 has the selected coordinate region Ea laid out as a selection button 35 and the determination coordinate regions Eb1 and Eb2 laid out as selection determination buttons 36 and 37. If the selected coordinate region Ea is positioned in the selection determination button 35, the selection determination button 35 is highlighted with the button focus 22 and if the selection coordinate position Px is placed in the selection determination button 36 on the upper side of the screen, for example, from the selection state, the item is moved up and is set.

- The determination function item buttons 26 of the item setting screen of determination system omission type (audio setting screen 25) may be buttons each with one determination button for one selection button like the buttons of the menu screen 19, as shown in FIG. 8. In this case, one determination function item button 26 is made up of a move up selection button 38 operated by the user to move up an item one at a time, a determination button 39 having only a determination function for the move up selection button 38, a move down selection button 40 operated by the user to move down an item one at a time, and a determination button 41 having only a determination function for the move down selection button 40. The move up selection button 38 and the move down selection button 40 make up an item button.

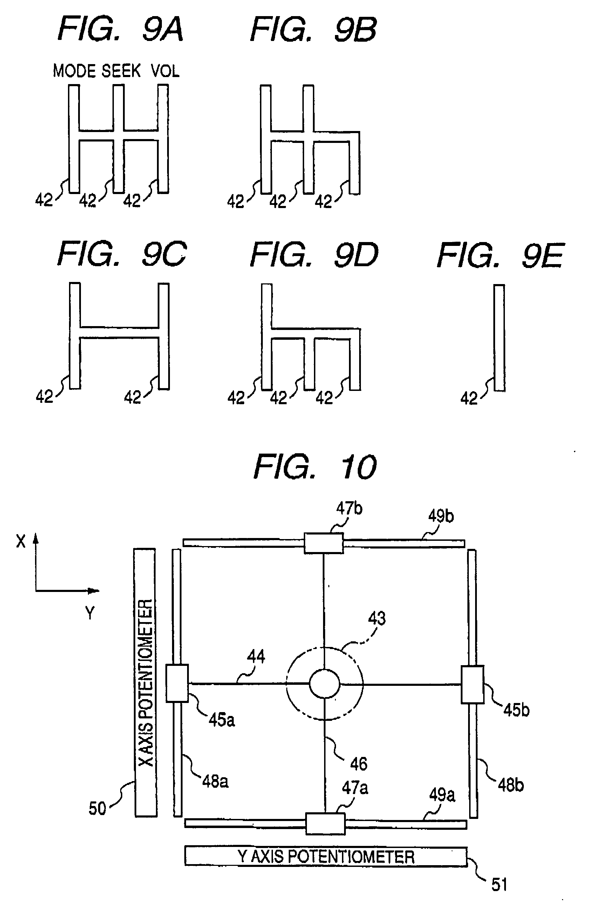

- If a move path for moving the selection coordinate position Px from one selection determination coordinate region to another selection determination coordinate region in one determination function item button 26 is one selection determination path 42, the item setting screen of determination system omission type (audio setting screen 25) shown in FIG. 3 can be represented as a coordinate layout made up of three selection determination paths 42 as shown in FIG. 9 (a). On the basis of this, the item setting screen of determination system omission type (audio setting screen 25) may be the case where one selection determination path 42 is movable only to one side as shown in FIG. 9 (b), the case where there are two selection determination paths 42 as shown in FIG. 9 (c), the case where only one selection determination path 42 is movable to both sides as shown in FIG. 9 (d), or the case where there is only one selection determination path 42 as shown in FIG. 9 (e).

According to the configuration of the embodiment, the following advantages can be provided:
(1) Since the determination button 21 (determination coordinate region Eb) is laid out for the button selection determination screen 4 displayed on the display 3 as an input channel of vehicle-installed machines, the remote input device 5 operated by the user to move the selection coordinate position Px of the screen of the display 3 need not be provided with a mechanical determination button, so that the structure of the remote input device 5 can be simplified. Similar comments also apply to the case where the return button 24 (return coordinate region Ed) is laid out for the button selection determination screen 4.

(2) Since the determination button 21 made of a dedicated button is displayed on the menu screen 19 as the determination region, it is made possible for the operator to visually check the position range of the determination button 21 and the operator can easily select the determination button 21.

(3) To lay out the determination button 21 for the menu screen 19, the layout enables the user to select one common determination button 21 from any of the selection item buttons 20 displayed on the menu screen 19, so that the number of the determination buttons to be provided can be lessened and the button layout space on the screen can be used effectively as compared with the case where the determination buttons 21 are provided in a one-to-one correspondence with the item buttons, for example.

(4) Since the item buttons of the audio setting screen 25 are the determination function item buttons 26 each assigned both of the selection function and the determination function, the need for assigning an independent determination button to this kind of item button is eliminated and the flexibility of the screen button layout can be improved. When the user performs determination operation with the determination function item button 26, the button focus 22 at the time remains highlighting the determination function item button 26 and thus display processing of switching display of the button focus 22 to another button can be skipped.

(5) Each of the determination function item buttons 26 of the audio setting screen 25 is assigned the two selection determination regions of the first selection determination coordinate region Eb1 operated by the user to move up the detailed item of the determination function item button 26 and the second selection determination coordinate region Eb2 operated by the user to move down the detailed item description of the determination function item button 26. Thus, if the user operates the remote input device 5 and positions the selection coordinate position Px of the audio setting screen 25 in the first selection determination coordinate region Eb1. or the second selection determination coordinate region Eb2, the user can move up or move down the detailed item of the determination function item button 26 placed in the selection state in a state in which display of the button focus 22 of the determination function item button 26 is not switched to another button.

(6) The determination function item buttons 26 are displayed on the audio setting screen 25. The contiguous determination function item buttons 26 are connected by a neutral coordinate region and the selection coordinate position Px can be moved from one of the determination function item buttons 26 to another. Thus, if a plurality of determination function item buttons 26 each having both of the selection function and the determination function are displayed as on the audio setting screen 25, the user can determine selection of one of the determination function item buttons 26 without any problem.

(7) Since the remote input device 5 is provided with the touch sense feedback mechanism 28, when the user selects the item button 20, 26 on the screen using the remote input device 5, a situation in which the user selects the determination button 21 (determination coordinate region Eb) or the return button 24 (return coordinate region Ed) in a different coordinate region by mistake becomes hard to occur and the operability of the button selection operation can be improved.

(8) If the selection coordinate position Px enters the determination button 21 from the selection item button 20 on the menu screen 19 or the selection coordinate position Px enters the determination coordinate region Eb from the selected coordinate region Ea on the audio setting screen 25, the function whose selection is determined at the time is executed in an instant. Thus, the time required from selection operation of the item button 20, 26 to function execution involving determination operation can be shortened; for example, a feeling that something is wrong, etc., at the determination operation time caused by a time lag, etc., can be made hard to occur.

(9) If the determination button 21 and the determination coordinate region Eb are laid out for the button selection determination screen 4 and the item buttons 20, 26 and the determination button 21 (determination coordinate region Eb) are laid out for the same screen, determination operation is also performed in an operation sequence of coordinate selection operation changing the selection coordinate position Px on the screen. Therefore, for example, in a structure wherein a mechanical determination button 21 exists on the remote input device 5, the user needs to select the selection coordinate position Px while seeing the screen of the display 3 and then operate the mechanical button after completion of the selection operation of the selection coordinate position Px, namely, two-step operation becomes necessary; the possibility that the selection coordinate position Px on the screen may shift in determination operation cannot be denied. However, in the example, such two-step operation becomes unnecessary and thus redoing of the selection determination operation becomes hard to occur, so that the operation time required at the determination operation time of the item button 20, 26 can be shortened. Particularly, to adopt the display type input system 2 in the example for the vehicle 1, if the operation time required for selection determination operation of the item button 20, 26 is shortened, the user is enabled to concentrate on driving the vehicle, and the advantage is also high from the point of ensuring safety of driving the vehicle.

The embodiment is not limited to the configurations described above and may be changed to the following:
- The structure of the remote input device 5 is not limited to the joy stick type for the user to select a screen coordinate position of the display 3 by inclining the operation lever 7, and may be a slide type as shown in FIG. 10, for example. If the remote input device 5 is the slide type, an operation knob 43 handled by the operator is attached and fixed to a pair of X axis sliders 45a and 45b through a first wire 44 and is attached and fixed to a pair of Y axis sliders 47a and 47b through a second wire 46. The X axis sliders 45a and 45b can be slid in the X axis direction along a pair of X axis guide rails 48a and 48b, and the Y axis sliders 47a and 47b can be slid in the Y axis direction along a pair of Y axis guide rails 49a and 49b. The move positions of the X axis sliders 45a and 45b are detected with an X axis potentiometer 50, and the move positions of the Y axis sliders 47a and 47b are detected with a Y axis potentiometer 51. The operation amount of the operation knob 43 is computed based on the detection values acquired from the potentiometers 50 and 51, and the selection coordinate position Px on the display 3 placed by the operator is found from the computation value.

- The touch sense feedback mechanism 28 is not necessarily limited to the motor type using the motors 29 and 30; for example, it may be a solenoid type using an electromagnetic solenoid, for example.
- In the button selection determination screen 4, the determination button 21 need not necessarily be shared among the item buttons 20; for example, dedicated determination buttons 21 may be provided in a one-to-one correspondence with the item buttons 20.

- The determination function item button 26 on the audio setting screen 25 may be a cross key button, for example.
- The hierarchy of the button selection determination screen 4 is not limited to the two levels from the menu screen 19 to the destination setting screen 23 (audio setting screen 25); it may be a three-level or more hierarchy.

- Application of the display type input system 2 in the example is not necessarily limited to the vehicle 1; the display type input system 2 may be applied to any, such as an input unit of a personal computer, for example.

Next, the technical idea that can be grasped from the above-described embodiment and examples are additionally described below together with the advantages:
(1) In any one of claims 1 to 11, the display control means displays a plurality of item buttons on the screen and produces button display on the screen in a layout for at least two of the item buttons to share one common determination button. In this case, since a plurality of item buttons share one common determination button, the total number of the determination buttons displayed on the screen can be decreased and it is made possible to effectively use the button layout space on the screen.

(2) In any one of claims 1 to 11, the display control means produces button display on the screen so as to surround the determination button by the item buttons displayed on the screen. In this case, the screen layout of the display becomes a layout in which the determination button is positioned at the center of the item buttons, so that when the user selects any desired button from among the item buttons and determines selection of the item button, it is made possible for the user to smoothly perform the selection determination operation sequence without a feeling that something is wrong.

(3) In any one of claims 4 to 11, the display control means lays out the determination coordinate region as the selection determination coordinate region for moving up one item of the item button for selecting and determining when the selection coordinate position is placed.

(4) In any one of claims 1 to 11, the display control means displays a scroll button operated by the user to scroll other item buttons hidden on the screen on the screen. In this case, for example, if the item buttons span a broad spectrum to such an extent that the number of the item buttons exceeds the number of item buttons that can be placed on one screen, it is made possible to solve this disadvantage if usually some of the item buttons are hidden and the hidden buttons are displayed when the user operates the scroll button.

## Claims

1. A remotely operated input system comprising:
a display;
a display controller that controls the display to display a function selection screen in which various item buttons and a determination region are laid out;
an input device that is separated from the display and allows an operator to perform determination operation of the various item buttons by designating an absolute position and moving a selection coordinate position on the screen based on the designated absolute position; and
a function execution unit that recognizes the item button in which the selection coordinate position is placed just before the selection coordinate position is placed in the determination region and executes a function of the recognized item button.

2. The remotely operated input system according to claim 1, wherein the display controller controls the display to display the determination region as a determination button different from the item buttons.

3. The remotely operated input system according to claim 1, wherein the various item buttons and the determination region in the function selection screen are arranged so that the selection coordinate position operated by the operator can be moved to one common determination region directly from any of the item buttons.

4. The remotely operated input system according to claim 1, wherein
the display controller lays out, in a display coordinate region of the item buttons, a selection coordinate region in which the selection coordinate position is to be placed when the item button is selected and a determination coordinate region in which the selection coordinate position is to be placed when the selected item button is determined, and
when the selection coordinate position is placed in the determination coordinate region, the function execution unit executes a function of the selection coordinate region in which the selection coordinate position is placed just before the selection coordinate position is placed in the determination coordinate region.

5. The remotely operated input system according to claim 4, wherein
the determination coordinate region includes a plurality of selection determination coordinate regions which are shifted in a predetermined direction,
when the selection coordinate position is placed on one of the plurality of selection determination coordinate regions, a content of the item button is shifted by one in a shifting direction corresponding to the predetermined direction.

6. The remotely operated input system according to claim 4, wherein the display controller lays out, in the function selection screen, a neutral coordinate region which connects the contiguous item buttons for allowing the operator to move the selection coordinate position from one of the item buttons to another.

7. The remotely operated input system according to claim 1, wherein the display controller lays out, in the function selection screen, a return region for returning a displayed screen to a preceding screen when the selection coordinate position is placed on the return region.

8. The remotely operated input system according to claim 1 further comprising a click feel generation mechanism for generating a click feel for operation of the input device when the item button or the determination region placed in a selection state with the selection coordinate position is switched to another button or another coordinate region.

9. The remotely operated input system according to claim 1, wherein when the selection coordinate position is placed in the determination region, the function execution unit immediately executes the function of the recognized item button.

10. The remotely operated input system according to claim 1, the remotely operated input system is used as an input channel of a vehicle-installed machine.
